# EUROPEAN PATENT APPLICATION

(11) **EP 4 793 074 A1**
(43) Date of publication of application: **19.08.2026**
(21) Application number: 26158303.3
(22) Date of filing: 12.02.2026
(51) Int. Cl.: B60K 1/04, B62D 25/00

(54) **AUTOVEICOLO CON DUE ABITACOLI DISTINTI E RISPETTIVAMENTE DELIMITATI DA GUSCI SILURIFORMI**

(30) Priority: 14.02.2025 IT 202500002844
(71) Applicant: FERRARI S.p.A., 41100 Modena (IT)
(72) Inventor: D'AGOSTINO, Simone, 41100 MODENA (IT); ANGIUS, Pierandrea, 41100 MODENA (IT); BALDINI, Andrea, 41100 MODENA (IT); LOPES FURTADO, Jason, 41100 MODENA (IT); MANZONI, Flavio, 41100 MODENA (IT); PALAZZANI, Carlo, 41100 MODENA (IT)
(74) Representative: Studio Torta S.p.A.

(57) **Abstract**

A motor vehicle (1) includes a body (2), in turn comprising a floorboard (3) and a pair of shell portions (4) coupled to the floorboard (3) at respective opposite lateral ends of the motor vehicle (1), according to a pitch axis (Y) of the motor vehicle, and arranged to define with the floorboard (3) respective distinct passenger compartments (5) of the motor vehicle and with at least one portion (8) of an external volume of the motor vehicle interposed between the shell portions (4) according to the pitch axis (Y).

## Description

### CROSS-REFERENCE TO RELATED APPLICATIONS

This patent application claims priority from Italian patent application no. 102025000002844 filed on February 14, 2025, the entire disclosure of which is incorporated herein by reference.

### TECHNICAL FIELD

The invention generally relates to a motor vehicle and more in particular to a motor vehicle with several separate passenger compartments.

### PRIOR ART

As is known, motor vehicles have a body defining a passenger compartment for accommodating the driver and possibly one or more additional passengers.

Typically, moreover, the body further defines two other compartments, one in front and the other behind the passenger compartment, for example to contain a motor for the propulsion of the motor vehicle or for placing luggage.

In general, in the sector, the need is felt to produce innovative solutions with respect to the usual canons, in particular to improve overall aerodynamic performance.

An object of the invention is to satisfy the need set forth above.

### DESCRIPTION OF THE INVENTION

The object is achieved by a motor vehicle as defined in claim 1.

The dependent claims define particular embodiments of the invention.

### BRIEF DESCRIPTION OF THE DRAWINGS

In order to better understand the invention, an embodiment thereof is described in the following by way of non-limiting example and with reference to the accompanying drawings, wherein:
- Figure 1 is a perspective view of a motor vehicle according to the invention,

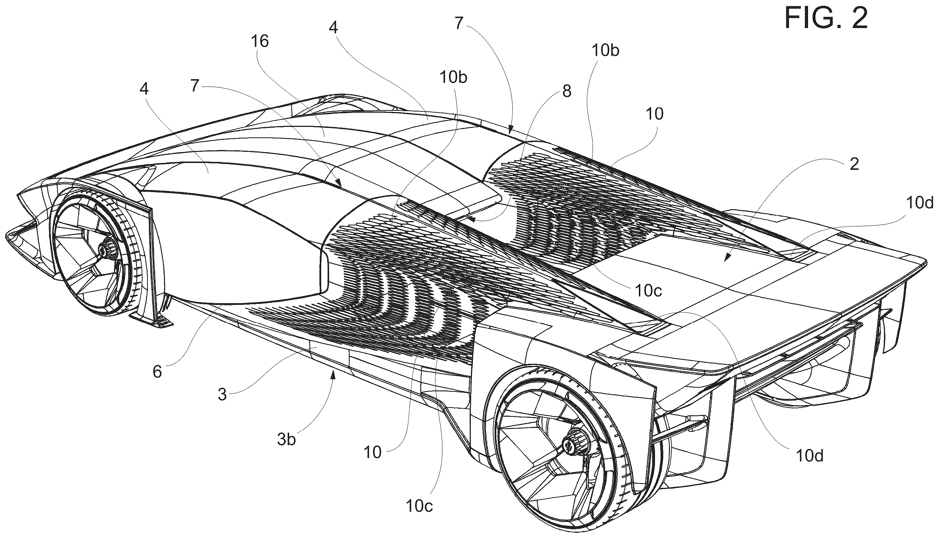

- Figure 2 is a further perspective view of the motor vehicle of Figure 1,
- Figure 3 is a cutaway view of the motor vehicle according to a longitudinal section plane, with schematized parts,
- Figure 4 is a section of the motor vehicle according to the aforementioned longitudinal plane, with schematized parts,
- Figure 5 is a plan diagram of a propulsion assembly of the motor vehicle,
- Figure 6 is a plan diagram of a variant of the propulsion assembly, and

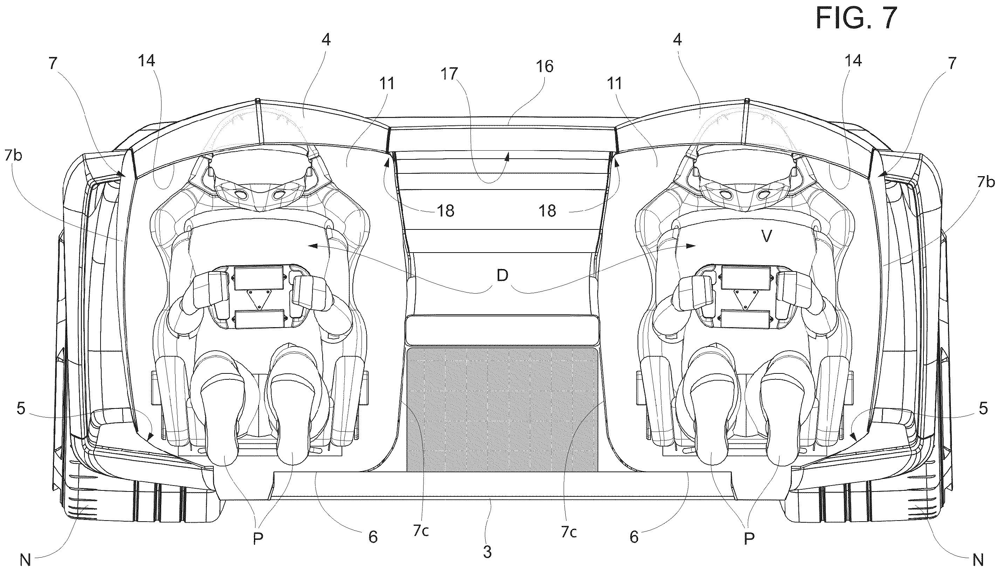

- Figure 7 is a perspective cutaway view of the motor vehicle, on an enlarged scale, according to a vertical section plane.

### EMBODIMENTS OF THE INVENTION

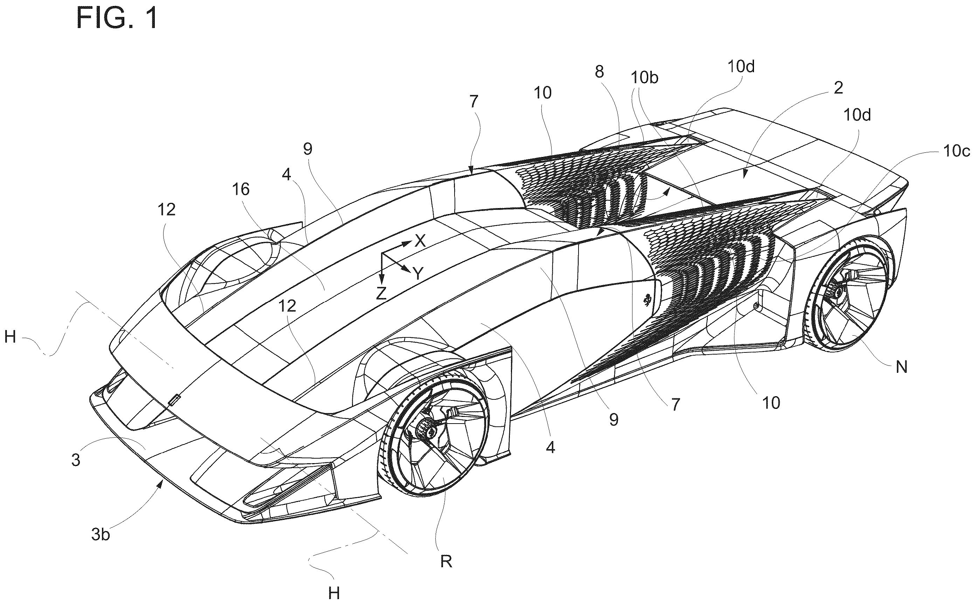

In Figure 1, reference numeral 1 is used to indicate, as a whole, a motor vehicle. Like all motor vehicles, the motor vehicle 1 has a plurality of wheels, in particular a pair of front wheels R and a pair of rear wheels N.

The motor vehicle 1 has a body frame defined by a Cartesian coordinate system; the body frame or more generally the motor vehicle has, in greater detail, a roll axis X, a pitch axis Y, and a yaw axis Z.

The roll axis X coincides with a longitudinal axis or a travel direction of the motor vehicle 1.

The pitch axis Y is horizontal, with reference to the normal use conditions of the motor vehicle 1, and orthogonal to the roll axis X.

The yaw axis Z is orthogonal to both axes X, Y and has at least one vertical component.

The motor vehicle 1 comprises a body 2, in turn comprising, as normally occurs, a chassis defining the structural frame of the motor vehicle 1 and a bodywork carried by the chassis and defining the external surfaces of the motor vehicle 1.

The body 2 has a floorboard 3 which in particular defines the lower base of the motor vehicle 1 and therefore has at least one lower surface 3b facing the road during use of the motor vehicle 1.

According to a possible non-limiting aspect, as visible in the drawings, the lower surface 3b is directly facing the road, i.e. without further elements of the motor vehicle 1 vertically between the lower surface 3b and the road.

The body 2 further comprises a pair of shell portions 4, preferably equal to each other, coupled to the floorboard 3 at respective opposite lateral ends of the motor vehicle 1 or more precisely of the floorboard 3 according to the axis Y.

The shell portions 4 define together with the floorboard 3 respective distinct passenger compartments 5. Each passenger compartment 5 is understood as an environment overall adapted to accommodate a human driver in conditions suitable for driving the motor vehicle 1. Therefore, the expression passenger compartment excludes cramped, and more precisely unsuitable, environments for accommodating the driver with a posture typically apt for driving.

In other words, the floorboard 3 comprises further shell portions 6 respectively coupled to the shell portions 4 to form (at least in part) corresponding shells 7 internally defining the passenger compartments 5, respectively.

The floorboard 3 or the surface 3b preferably has a portion extending between the shells 7 according to the axis Y, for the entire longitudinal dimension of the shells 7 along the axis X. In other words, the above-mentioned portion of the floorboard 3 or the surface 3b extends along the axis X between two longitudinal ends, both in turn extending in width according to the axis Y between the shells 7.

Preferably, the surface 3b ends posteriorly with an aerodynamic diffuser or extractor, i.e. an inverted chute with a lower front end according to the axis Z and narrower according to the axis Y, and a raised rear end according to the axis Z and wider according to the axis Y.

Both passenger compartments 5 are actually set up to accommodate the driver, whereby they can both comprise, for example, respective seats.

Alternatively or additionally, both passenger compartments 5 can contain respective driving means or devices D (inside the passenger compartments 5) to allow the driver to drive the motor vehicle 1. For example, each of the driving devices D may comprise a steering wheel V and pedals P (for example a brake pedal and an accelerator pedal) with typical functions per se and not described in further detail.

Clearly, when one of the driving devices D in one of the passenger compartments 5 is in use, the other of the driving devices D in the other passenger compartment 5 can be disabled for safety. This can occur automatically by means of a program on a control unit (not illustrated) of the motor vehicle 1 or by means of a key which can enable only one of the driving devices D, while the other remains disabled.

In this manner, the driver can choose whether to drive on the right or left side of the motor vehicle 1, simply by entering the desired passenger compartment 5.

The shells 7 have respective walls configured to define and/or circumscribe the passenger compartments 5, as well as distinct and separated from each other. That is, the walls of each of the shells 7 have no common portions or do not intersect with the walls of the other of the shells 7.

Similarly, the shell portions 4 are separated from each other, i.e. they have no parts in common or do not intersect each other.

Like the shell portions 4, the shells 7 are respectively located at the opposite lateral ends of the motor vehicle 1 according to the axis Y.

At least one portion 8 of an external volume or space (i.e. directly exposed to external air during use) of the motor vehicle 1 is interposed according to the axis Y between the shell portions 4, whereby, in other words, the portion 8 of the external volume separates the shell portions 4 from each other according to the axis Y.

Specifically, the shells 7 are not limited exclusively to defining the passenger compartments 5; in particular, the shells 7 have respective front heads 9 (according to the normal direction of travel of the motor vehicle 1), which are those that specifically define the passenger compartments 5, and respective rear tails 10 extending behind the heads 9 substantially continuously, i.e. except for demarcation slots with negligible longitudinal dimensions (e.g. less than 10 mm).

The tails 10 internally define respective cavities (not illustrated) conveniently separated according to the axis X from the respective adjacent passenger compartments 5 by means of corresponding internal finishing walls or panels 11 with the function of dividing the cavities with respect to the passenger compartments 5.

For example, the tails 10 are permeable to air or porous, so that air can pass in the respective cavities through the tails 10; in particular, the tails 10 can be at least partially formed by a mosaic or mesh 10b with gaps between the tiles of the mosaic or between the full parts of the mesh, so that the gaps allow air to pass in the cavities through the respective tails 10. Alternatively or additionally, the tails 10 comprise one or more slits or louvers 10c which put the cavities in communication with the exterior. Alternatively or additionally, the tails 10 have openings 10d arranged at the respective rear ends and facing the rear of the motor vehicle 1 to allow the outflow of the air passed inside the cavities towards the rear of the motor vehicle 1.

Preferably, in the illustrated embodiment, access to the passenger compartments 5 is allowed by means of movable doors or wings 12 forming part of the shell portions 4. The wings 12 are indeed movable with respect to the respective shell portions 6. For example, the wings 12 comprise at least one part of the respective upper external surfaces of the shell portions 4 and are hinged, in particular anteriorly, on the body 2 or more precisely on the floorboard 3 around axes H parallel to the axis Y, so that the wings 12 can be rotated around the axes H, in particular towards the front of the motor vehicle 1, to allow access to the respective passenger compartments 5 from above.

For clarity, in this description, expressions such as front, anteriorly, rear, posteriorly, in front, back, and the like refer to the normal travel direction of the motor vehicle 1.

Similarly, expressions such as upper, lower, high, low, and the like, refer to the normal use conditions of the motor vehicle 1.

Some areas of the shell portions 4, by way of non-limiting example, may be at least partially transparent to allow visibility, for example front and side, of the exterior of the motor vehicle 1 from inside the passenger compartments 5. This is not necessary, however, since the driving of the motor vehicle 1 could still occur, for example, by means of a virtual reality viewer applicable to the driver and receiving visual information relating to the exterior of the motor vehicle 1 from cameras suitably positioned on external areas of the body 2.

Each of the shell portions 4 (or at least one thereof) preferably comprises a dome 14 with concavity facing the floorboard 3. The dome 14 specifically defines a roof of the respective passenger compartment 5.

In particular, the dome 14 has at least one transverse section, i.e. according to a plane orthogonal to the axis X, having the shape of an ellipse or circumference arc according to embodiments not illustrated.

Alternatively or additionally, each of the shell portions 6 (or at least one thereof) has an opposite concavity with respect to the dome 14 and is coupled thereto to form the respective shell 7. Despite this, in general, the shell portion 6 could also be flat in other embodiments, rather than necessarily having a concavity, in particular opposite with respect to the dome 14.

Specifically, the shell portion 6 therefore defines a kind of cradle or tub internally delimiting the lower area of the respective passenger compartment 5.

In particular, the shell portion 6 defines a floor of the respective passenger compartment 5.

According to a possible non-limiting aspect, for example since the shell portion 6 defines the floor of the respective passenger compartment 5, the floorboard 3 defines the floors of the passenger compartments 5. Therefore, according to a possible non-limiting aspect, the floorboard 3 has further upper surfaces respectively defining the floors of the passenger compartments 5.

According to a possible non-limiting aspect, the floorboard 3 is vertically delimited between the upper surface 15 and the lower surface 3b.

According to a possible non-limiting aspect, each of the shells 7 comprises two respective lateral walls 7b, 7c opposite each other according to the axis Y, laterally delimiting the respective passenger compartment 5 therebetween according to the axis Y, and each extending vertically from the floor of the respective passenger compartment 5 up to the roof of the respective passenger compartment 5, the lateral wall 7b being laterally more external than the lateral wall 7c, wherein the respective lateral walls 7c of the shells 7 face each other according to the axis Y with the portion 8 of the external volume interposed according to the axis Y between the lateral walls 7c.

Overall, each shell 7 (or at least one thereof) has a generally ogival or torpedo-shaped form, i.e. substantially cylindrical or ellipsoidal with at least one longitudinal end (according to the axis X) tapered and the other opposite longitudinal end preferably truncated or wedge-shaped, essentially as occurs in a bullet or torpedo. Specifically, the tapered longitudinal end is the rear end.

In general, the portion 8 of the external volume between the shell portions 4 is preferably delimited inferiorly by an upper surface 15 of the floorboard 3. In particular, the upper surface 15 extends between the shell portions 4 or between the shells 7 or more precisely between the shell portions 6 according to the axis Y. Even more in particular, the upper surface 15 extends between respective longitudinal ends along the axis X, the longitudinal ends in turn extending according to the axis Y between the shell portions 4 or between the shells 7 or more precisely between the shell portions 6.

Preferably, the body 2 comprises a bridge element 16 extending between the shell portions 4 according to the axis Y so as to structurally connect the shell portions 4 to each other.

More preferably, the bridge element 16 is configured to make or establish a visual communication, i.e. so that the driver can see the interior of one of the passenger compartments 5 from the interior of the other, and/or fluidic communication between the passenger compartments 5.

In detail, the bridge element 16 internally defines a tube or duct 17 extending according to the axis Y between two end openings 18 facing each other and respectively obtained on the shell portions 4 to put the duct 17 in communication with both passenger compartments 5.

The duct 17 and/or the respective end openings 18 are in any case shaped so that an effective physical passage of the driver from one passenger compartment 5 to the other is prevented through the duct 17, whereby the latter effectively allows visual and/or fluidic communication between the passenger compartments 5, but it does not allow a movement of the driver from one passenger compartment 5 to the other.

In other words, the duct 17 is unsuitable for accommodating the driver, whereby it does not define nor form part of a passenger compartment.

According to an example, the end openings 18 could be closed by respective at least partially transparent panels, so that visual communication is established, while fluidic communication is instead prevented.

As can be seen for example from the figures, at least a part of the portion 8 of the external volume can be defined by a channel portion 19 vertically arranged below the bridge element 16, or more precisely between the upper surface 15 and the bridge element 16, and more particularly between the shell portions 4 or the shells 7 according to the axis Y.

Conveniently, the bridge element 16 may have an upper external surface arranged in continuity or flush with at least a part of the upper external surfaces of the shell portions 4.

In particular, the bridge element 16 ends longitudinally and posteriorly at the rear ends of the heads 9, whereby a part of the portion 8 of the external volume between the tails 10 according to the axis Y is more in particular completely uncovered on the exterior of the motor vehicle 1 upwards.

On the other hand, as already described, the bridge element 16 covers the channel portion 19 from above.

Preferably, the body 2 defines one or more compartments 20 between the shell portions 4 or the shell portions 6 or the shells 7 according to the axis Y.

More precisely, the compartments 20 are at least partly or entirely delimited laterally (according to the axis Y) by the shell portions 6 or by the shells 7. In other words, one or more compartments 20 could be arranged anteriorly or posteriorly with respect to the shell portions 6 or the shells 7, so as not to be laterally delimited by them, while one or more other compartments 20 are actually laterally surrounded by the shell portions 6 or by the shells 7.

Alternatively or additionally, the compartments 20 are delimited superiorly by the upper surface 15 and/or inferiorly by the lower surface 3b of the floorboard. In other words, the compartments 20 are obtained inside the floorboard between the shells 7 or the shell portions 4 or 6 according to the axis Y. Here, according to a possible non-limiting aspect, the compartments 20 are distinct and separated (or not communicating with each other) from the passenger compartments 5. Alternatively or additionally, according to a possible non-limiting aspect, the compartments 20 are closed volumes separated from the passenger compartments 5.

The motor vehicle 1 comprises a propulsion assembly for propulsion of the motor vehicle 1, i.e. for driving at least one of the pairs of wheels R, N in rotation, thus causing the motor vehicle 1 to travel along the axis X.

The propulsion assembly comprises one or more motors 21, 22, preferably housed in the compartments 20.

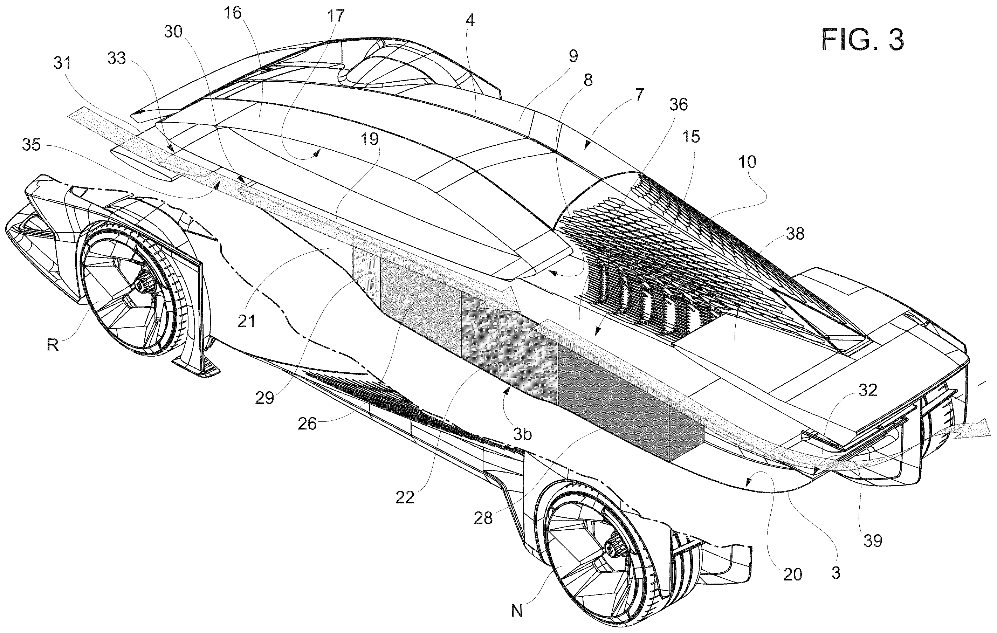

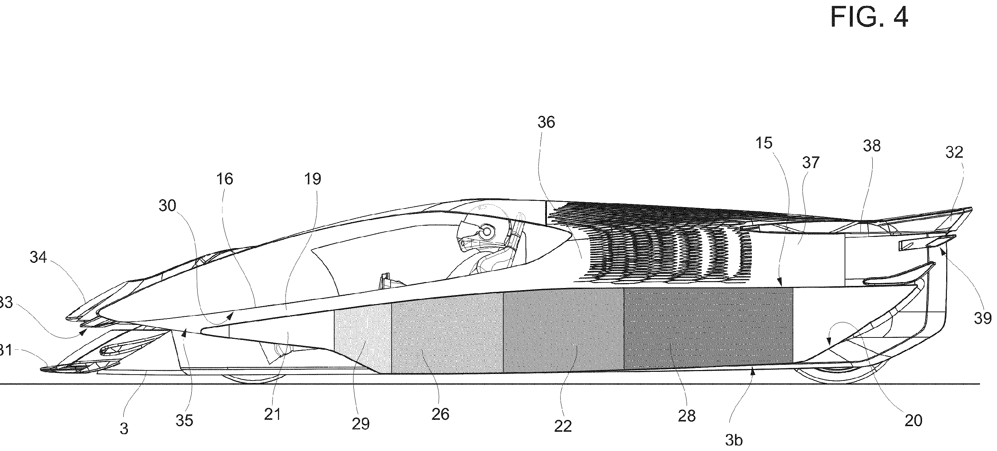

For example, as in Figures 3 and 4, the motors 21, 22 could be respectively an electric motor generator and an internal combustion engine supplied with fuel, in particular but not necessarily hydrogen, for example stored in the motor vehicle 1 in a liquid or gaseous state, without any loss of generality.

Specifically, even if the configuration of the motors 21, 22 could clearly be reversed, the motor 21 is arranged to drive the pair of wheels R in rotation, while the motor 22 is arranged to drive the pair of wheels N in rotation.

In particular, the motor vehicle 1 comprises a transmission, in turn comprising a gearbox 28, configured to transmit power output from the motor 22 to the pair of wheels N (in other cases, the pair of wheels R could be connected to the motor 22 by means of the transmission). The gearbox 28 is preferably housed in one of the compartments 20, specifically the same one in which the motor 22 is housed.

Each of the compartments 20 housing the motors 21, 22 is itself independently, therefore, a motor compartment of the body 2.

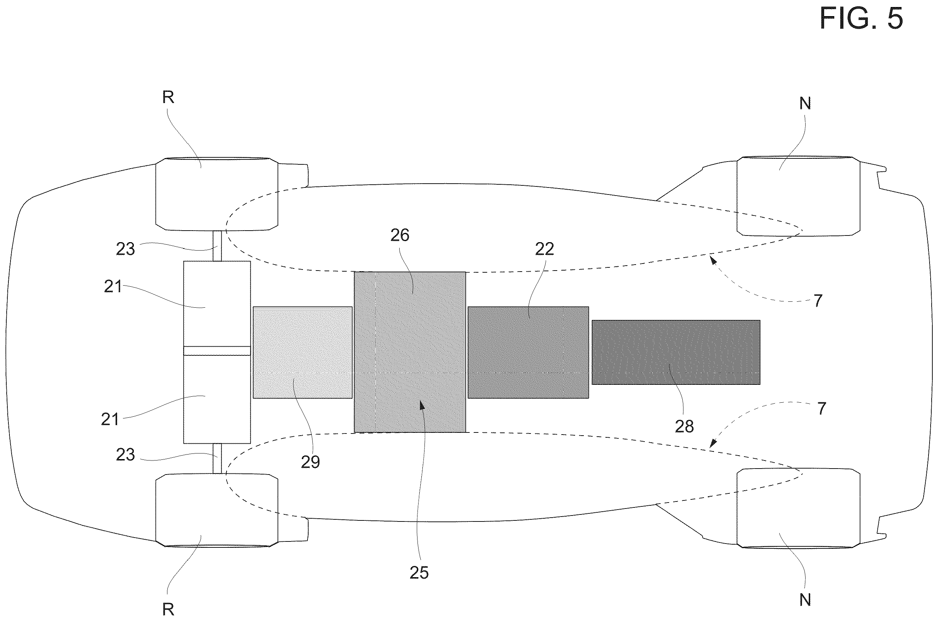

As in Figure 5, the motor 21 could conveniently be replaced by a pair of electric motors 21, each arranged to drive a corresponding one of the pair of wheels R in rotation (or of the pair of wheels N according to an alternative).

The pair of electric motors 21 could be part of an electric axle 23 and be housed in one of the compartments 20, for example with a configuration of the electric motors aligned with each other according to the axis Y. Alternatively, the electric motors of the pair could be integrated with the wheels R or the wheels N, i.e. located therein, respectively.

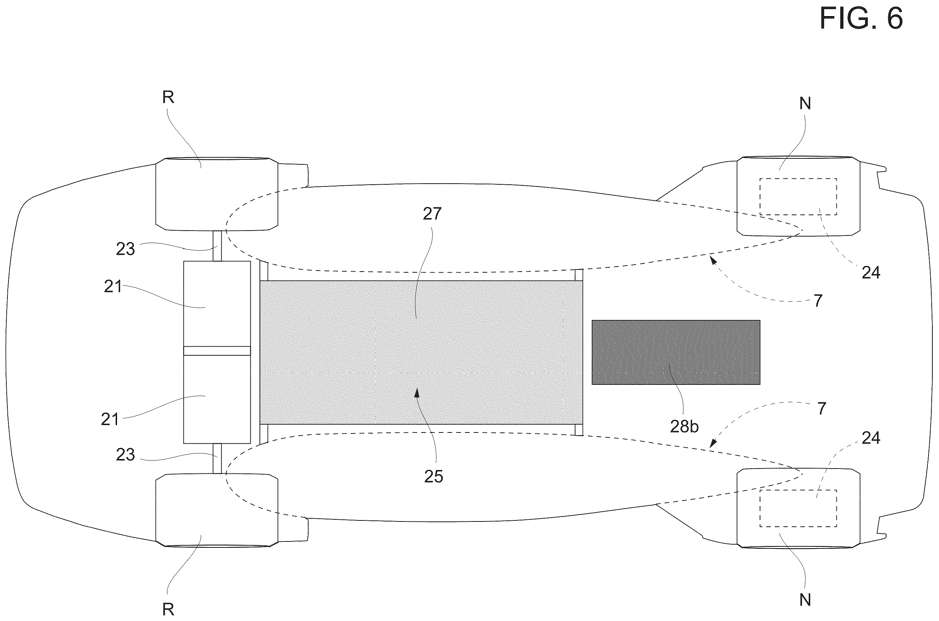

In the embodiment of Figure 6, the motor 21 is effectively replaced by the pair of electric motors 21 forming part of the electric axle 23, as just described above, while the motor 22 is replaced by a further pair of electric motors 24 integrated with the wheels N.

In general, for supplying the propulsion assembly, the motor vehicle 1 comprises at least one storage device 25 configured to store an energy source for the propulsion of the motor vehicle 1.

For example, in the embodiment of Figure 5, the storage device 25 comprises a tank 26, in this case for containing fuel, in particular hydrogen, for example in the liquid or gaseous state. Alternatively, in the embodiment of Figure 6, the storage device 25 comprises an electrical energy storage device 27, in particular a battery pack.

In the embodiment of Figure 6, even if this is similarly applicable to the embodiment of Figure 5, one of the compartments 20 houses an inverter 28b for controlling the electric motors 21.

The storage device 25 is preferably arranged between the shell portions 4 or the shells 7 according to the axis Y. Therefore, more in particular, the storage device 25 is housed in one of the compartments 20.

More precisely, the storage device 25 comprises a structural portion (which can be the set of the external walls of the tank 26 or the external casing of the device 27) fixed to both shell portions 4, in particular indirectly, being fixed more in particular at the shell portions 6.

In this manner, the structural portion of the storage device 25 in fact makes a beam which structurally connects the shell portions 4 or more generally the shells 7 to each other according to a transversal direction with respect to the axis X.

More precisely, the beam extends between the shell portions 4 or between the shells 7 according to the axis Y.

Alternatively, the storage device 25 could be suspended (e.g. by means of suspension elements, for example of known type and not illustrated), with respect to the shell portions 4 or 6, i.e. with respect to the shells 7.

In the embodiment of Figure 5, in particular in addition to the storage device 25, the motor vehicle 1 comprises an electrical energy storage device 29, for example a battery pack, configured to supply the motor 21 (or the pair of motors in replacement thereof) with electrical energy. The electrical energy storage device 29 is preferably arranged between the shell portions 4 or between the shells 7 according to the axis Y, in particular in one of the compartments 20, more in particular the one containing the motor 21.

Preferably, one of the compartments 20 houses, in particular between the shells 7 or the shell portions 4 according to the axis Y, an electric power generator (not illustrated) by Seebeck effect, i.e. a thermoelectric generator.

The motor vehicle 1 generally has a front end 31 and a rear end 32. In greater detail, the floorboard 3 or the surface 3b extends along the axis X starting from the front end 31 until ending at the rear end 32.

Conveniently, the body 2 defines an aerodynamic duct 30 extending along the axis X from the front end 31 to the rear end 32 of the motor vehicle 1 between the shell portions 4 or the shells 7 according to the axis Y.

The aerodynamic duct 30 is inferiorly delimited by the upper surface 15 of the floorboard 3 and laterally delimited by the shell portions 4 or by the shells 7.

The aerodynamic duct 30 can be at least partly open superiorly (i.e. exposed superiorly) towards the exterior of the motor vehicle 1.

In particular, the aerodynamic duct 30 comprises the channel portion 19 (covered superiorly by the bridge element 16) .

In detail, the aerodynamic duct 30 can begin with an opening 33 at the front end 31, for example defined vertically between a front bumper 34 of the body 2 and the floorboard 3.

Alternatively or additionally, the aerodynamic duct 30 has an opening 35 obtained on the floorboard 3 at the lower surface 3b and therefore facing, in use, towards the road.

Specifically, the opening 35 is arranged downstream of the opening 33 according to the axis X.

The channel portion 19 is arranged downstream of the opening 33 according to the axis X and more in particular above the opening 35 according to the axis Z.

Downstream of the channel portion 19, the aerodynamic duct 30 preferably comprises a superiorly uncovered portion 36.

Then, downstream of the superiorly uncovered portion 36, where present, the aerodynamic duct 30 comprises a channel portion 37 covered by a further bridge element 38 which structurally connects the shells 7 or the shell portions 4 together, extending therebetween according to the axis Y.

The aerodynamic duct 30 ends with an opening 39 at the rear end 32, for example vertically between the bridge element 38 and the upper surface 15 of the floorboard.

Therefore, specifically, the opening 39 is arranged downstream of the channel portion 37.

The advantages of the motor vehicle 1 according to the invention are evident from the foregoing.

The motor vehicle 1 has a revolutionary construction with respect to the known common motor vehicles with the two distinct passenger compartments 5 and surrounded by the shells 7 spaced apart according to the axis Y and preferably with an ogival shape.

In particular, the shape of the shells 7 with the aerodynamic duct in the middle according to the axis Y have a high aerodynamic efficiency and guarantee high aerodynamic performance.

The motor vehicle 1 is indifferently drivable both with the driver on the right side and with the driver on the left side of the motor vehicle 1.

The propulsion assembly is optimally located from the point of view of managing the spaces inside the floorboard 3 between the upper surface 15 and the lower surface 3b.

Finally, it is clear that the motor vehicle 1 according to the invention can be modified and varied without, however, departing from the scope of protection defined by the claims.

## Claims

1. A motor vehicle (1) comprising a body (2), in turn comprising a floorboard (3) and a pair of shell portions (4) coupled to the floorboard (3) at respective opposite lateral ends of the motor vehicle (1), according to a pitch axis (Y) of the motor vehicle, and arranged to define with the floorboard (3) respective distinct passenger compartments (5) of the motor vehicle and with at least one portion (8) of an external volume of the motor vehicle interposed between the shell portions (4) according to the pitch axis (Y) and inferiorly delimited by an upper surface (15) of the floorboard (3).

2. The motor vehicle according to claim 1, wherein at least one of the shell portions (4) comprises a dome (14) with a concavity facing the floorboard (3).

3. The motor vehicle according to claim 2, wherein the floorboard (3) comprises a portion (6) having an opposite concavity with respect to the dome (14) and coupled to the dome (6) to form a shell (7) internally defining one of the passenger compartments (5).

4. The motor vehicle according to claim 2 or 3, wherein the dome (14) has at least one section according to a plane orthogonal to a roll axis (X) of the motor vehicle (1), the section being shaped as an ellipse arc.

5. The motor vehicle according to any one of the preceding claims, comprising corresponding driving means (D) within each of the passenger compartments (5), the driving means (D) being configured to allow a human driver to drive the motor vehicle (1).

6. The motor vehicle according to any one of the preceding claims, comprising a storage device (25) configured to store an energy source for propulsion of the motor vehicle (1), the storage device (25) comprising a structural portion fixed to both the shell portions (4) and arranged between the shell portions (4), according to the pitch axis (Y), so as to define a beam structurally connecting the shell portions (4) to each other according to a transversal direction with respect to a roll axis (X) of the motor vehicle.

7. The motor vehicle according to any one of the preceding claims, further comprising at least one motor (21, 22) for propulsion of the motor vehicle (1).

8. The motor vehicle according to claim 7, wherein the body (2) defines a motor compartment (20) housing said motor (21, 22) between the shell portions (4) according to the pitch axis (Y).

9. The motor vehicle according to claim 7 or 8, comprising at least one electrical energy storage device (29) configured to supply said motor (21) with electrical energy and arranged between the shell portions (4) according to the pitch axis (Y).

10. The motor vehicle according to any one of the preceding claims, wherein the body (2) comprises a bridge element (16) extending between the shell portions (4) according to the pitch axis (Y), so as to structurally connect the shell portions (4) to each other, and configured to establish a visual and/or fluidic communication between the passenger compartments (5).

11. The motor vehicle according to claim 10, wherein a part of the portion (8) of the external volume is defined by a channel portion (19) vertically arranged below the bridge element (16) between the upper surface (15) and the bridge element (16), as well as between the shell portions (4) according to the pitch axis (Y).

12. The motor vehicle according to any one of the preceding claims, wherein the floorboard (3) defines the lower base of the motor vehicle (1), thereby having at least one lower surface (3b) facing the road in use.

13. The motor vehicle according to any one of the preceding claims, wherein the floorboard (3) comprises further shell portions (6) respectively coupled to said shell portions (4) to form, at least in part, corresponding shells (7) internally defining the passenger compartments (5), respectively.

14. The motor vehicle according to claim 13, wherein each of the shells (7) has respective walls configured to define and circumscribe a corresponding one of the passenger compartments (5), said walls of each of the shells (7) being distinct and separate from said walls of the other of the shells (7).

15. The motor vehicle according to claim 13 or 14, wherein each of the further shell portions (6) defines a floor of the respective passenger compartment (5).

16. The motor vehicle according to any one of claims 13 to 15, wherein the upper surface (15) extends between the shells (7) and/or between the further shell portions (6) according to the pitch axis (Y).

17. The motor vehicle according to any one of claims 13 to 16, wherein the body (2) defines a compartment (20) between the shells (7) or the further shell portions (6) according to the pitch axis (Y), the compartment (20) being entirely delimited laterally, according to the pitch axis (Y), by the shells (7) or by the further shell portions (6).

18. The motor vehicle according to any one of claims 15 to 17, wherein each of the shell portions (4) comprises a respective dome (14) with a concavity facing the floorboard (3) and defining a roof of the respective passenger compartment (5), each of the shells (7) comprising a respective first lateral wall and a respective second lateral wall (7b, 7c), the first and second lateral walls being opposite each other according to the pitch axis (Y), laterally delimiting the respective passenger compartment (5) therebetween according to the pitch axis (Y), and each extending vertically from the floor of the respective passenger compartment (5) up to the roof of the respective passenger compartment (5), wherein the first lateral wall (7b) is laterally more external than the second lateral wall (7c) according to the pitch axis (Y), wherein the respective second lateral walls (7c) of the shells (7) face each other according to the pitch axis (Y) with the portion (8) of the external volume interposed according to the pitch axis (Y) between the respective second lateral walls (7c) of the shells (7).

19. The motor vehicle according to any one of claims 13 to 18, wherein at least one of the shells (7) has an ogival or torpedo-shaped form.
